(19) Europäisches Patentamt / European Patent Office / Office européen des brevets

(11) **EP 2 651 025 A1**

(12) **EUROPEAN PATENT APPLICATION**

(43) Date of publication:
**16.10.2013 Bulletin 2013/42**

(51) Int Cl.:
***H02M 7/487*** *(2007.01)*

(21) Application number: **12163558.5**

(22) Date of filing: **10.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Oy**
**00380 Helsinki (FI)**

(72) Inventor: **Paakkinen, Mikko**
**00380 Helsinki (FI)**

(74) Representative: **Parta, Ari Petri**
**Kolster Oy Ab**
**Iso Roobertinkatu 23**
**P.O. Box 148**
**00121 Helsinki (FI)**

Remarks:
Amended claims in accordance with Rule 137(2) EPC.

(54) **3-level fullbridge NPC inverter assembly for connection to a single phase grid and photovoltaic power plant comprising the same**

(57) An inverter assembly comprising a DC circuit, inverter means, and control means (CTRL) for controlling the inverter means, the inverter means being multilevel inverter means comprising a first half bridge (HB1) and a second half bridge (HB2), the control means (CTRL) being adapted to provide a first operating state in which the control means (CTRL) operate the inverter means as a full-bridge inverter. The control means (CTRL) are further adapted to provide at least one further operating state in which the control means (CTRL) operate the inverter means as a half-bridge inverter, the control means (CTRL) being adapted to select an operating state based on predetermined conditions.

Fig. 1

EP 2 651 025 A1

**Description**

FIELD OF THE INVENTION

The present invention relates to an inverter assembly according to preamble of independent claim 1.

A full-bridge inverter is known in the art. Also, a full-bridge NPC inverter is known in the art.

One of the disadvantages associated with a known full-bridge inverter is that it has relatively high switching losses.

BRIEF DESCRIPTION OF THE INVENTION

An object of the present invention is to provide an inverter assembly so as to alleviate the above disadvantage. A further object of the present invention is to provide a solar power plant comprising the inverter assembly. The objects of the invention are achieved by an inverter assembly and a solar power plant which are characterized by what is stated in the independent claims. The preferred embodiments of the invention are disclosed in the dependent claims.

The invention is based on the idea of operating a full bridge inverter as a half-bridge inverter in predetermined circumstances. An advantage of the inverter assembly of the invention is reduction in losses.

BRIEF DESCRIPTION OF THE DRAWINGS

In the following the invention will be described in greater detail by means of preferred embodiments with reference to the attached drawings, in which

> Figure 1 shows an inverter assembly according to an embodiment of the invention;
> Figure 2 shows the inverter assembly of Figure 1 in another operating state; and
> Figure 3 shows an inverter assembly according to another embodiment of the invention.

DETAILED DESCRIPTION OF THE INVENTION

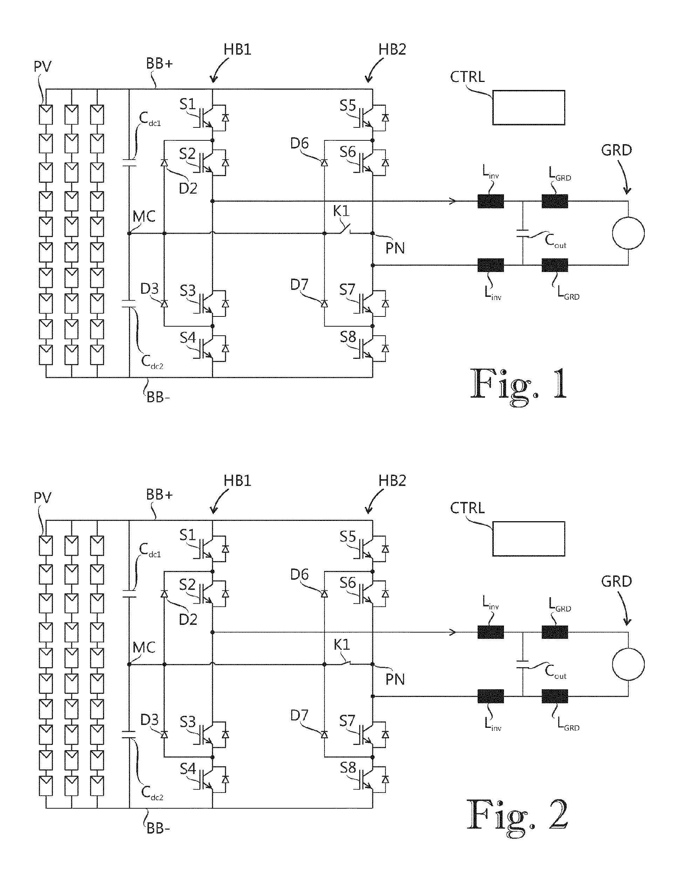

Figure 1 shows an inverter assembly comprising a DC circuit, inverter means, and control means CTRL for controlling the inverter means.

The DC circuit comprises a positive busbar BB+, a negative busbar BB-, and input capacitor means. During use there is an input direct voltage $U_{dc}$ present between the positive busbar BB+ and the negative busbar BB-. Herein a busbar stands for any electrically conductive element suitable for forming a part of a DC circuit. The input capacitor means comprise a first energy storage capacitor $C_{dc1}$ and a second energy storage capacitor $C_{dc2}$ connected in series between the positive busbar BB+ and the negative busbar BB-. There is a midpoint MC between the first energy storage capacitor $C_{dc1}$ and the second energy storage capacitor $C_{dc2}$.

The inverter means are adapted to convert a direct current supplied into the inverter means through the positive busbar BB+ and the negative busbar BB- to an alternating current, and to feed the alternating current through output terminals of the inverter means to an electrical network GRD having a network voltage which is an alternating voltage. The inverter means are multilevel inverter means comprising a first half bridge HB1 and a second half bridge HB2.

The first half bridge HB1 comprises controllable switches S1, S2, S3 and S4 connected in series between the positive busbar BB+ and the negative busbar BB-. The first half bridge HB1 further comprises a first diode leg including diodes D3 and D2 connected in series. A first end of the first diode leg is connected to a point between controllable switches S3 and S4. A second end of the first diode leg is connected to a point between controllable switches S1 and S2. Anode of diode D2 and cathode of diode D3 are connected to the midpoint MC of the input capacitor means.

The second half bridge HB2 comprises controllable switches S5, S6, S7 and S8 connected in series between the positive busbar BB+ and the negative busbar BB-. The second half bridge HB2 further comprises a second diode leg including diodes D7 and D6 connected in series. A first end of the second diode leg is connected to a point between controllable switches S7 and S8. A second end of the second diode leg is connected to a point between controllable switches S5 and S6. Anode of diode D6 and cathode of diode D7 are connected to the midpoint MC of the input capacitor means.

The inverter assembly further comprises a switch element K1 between a neutral reference point PN and the midpoint MC of the input capacitor means. The neutral reference point PN is a point between controllable switches S6 and S7. In its on-position the switch element K1 electrically connects the neutral reference point PN and the midpoint MC. In its off-position the switch element K1 electrically separates the neutral reference point PN and the midpoint MC.

The neutral reference point PN is connected to a neutral terminal of the electrical network GRD through a neutral leg comprising an inverter side inductor $L_{inv}$ and a grid side inductor $L_{GRD}$ connected in series. The inverter assembly also comprises a phase leg whose first end is connected to the first half bridge HB1 between the controllable switches S2 and S3, and whose second end is connected to a phase terminal of the electrical network GRD. The phase leg comprises an inverter side inductor $L_{inv}$ and a grid side inductor $L_{GRD}$ connected in series.

There is an output capacitor $C_{out}$ connected between the phase leg and the neutral leg. One terminal of the output capacitor $C_{out}$ is connected to the phase leg between the inverter side inductor $L_{inv}$ and the grid side inductor $L_{GRD}$, while the other terminal of the output capacitor $C_{out}$ is connected to the neutral leg between the inverter side inductor $L_{inv}$ and the grid side inductor $L_{GRD}$.

The control means CTRL are adapted to provide a first operating state in which the control means CTRL operate the inverter means as a full-bridge inverter. A switching table 1 shows positions of the controllable switches S1 to S8 during the first operating state, and corresponding values of an output voltage $U_{out}$. The switching table 1 also shows that the switch element K1 is always in its off-position during the first operating state. Figure 1 shows the inverter assembly in the first operating state.

Switching table 1, a first operating state.

| Switch | | | | |
|---|---|---|---|---|
| S1 | 1 | 0 | 0 | 0 |
| S2 | 1 | 0 | 1 | 0 |
| S3 | 0 | 1 | 0 | 1 |
| S4 | 0 | 1 | 0 | 0 |
| S5 | 0 | 1 | 0 | 0 |
| S6 | 0 | 1 | 0 | 1 |
| S7 | 1 | 0 | 1 | 0 |
| S8 | 1 | 0 | 0 | 0 |
| K1 | 0 | 0 | 0 | 0 |
| Uout | + $U_{dc}$ | - $U_{dc}$ | 0a | 0b |

The control means CTRL are further adapted to provide a second operating state and a third operating state. In both the second operating state and the third operating state the control means CTRL operate the inverter means as a half-bridge inverter such that the second half bridge HB2 is disconnected from the positive busbar BB+ and the negative busbar BB- while the neutral reference point PN is connected to the midpoint MC of the input capacitor means. The control means CTRL are adapted to select an operating state based on predetermined conditions.

A switching table 2 shows positions of the controllable switches S1 to S8 during the second operating state, and corresponding values of an output voltage $U_{out}$. Controllable switches S5 and S8 are always open thereby disconnecting the second half bridge HB2 from the positive busbar BB+ and the negative busbar BB-. According to the switching table 2 the neutral reference point PN is connected to the midpoint MC of the input capacitor means through a subset of the controllable switches of the second half bridge HB2, namely through controllable switches S6 and S7. The switch element K1 is in its off-position throughout the second operating state. Therefore Figure 1 also depicts the inverter assembly in the second operating state.

Switching table 2, a second operating state.

| Switch | | | | |
|---|---|---|---|---|
| S1 | 1 | 0 | 0 | 0 |
| S2 | 1 | 0 | 1 | 0 |
| S3 | 0 | 1 | 0 | 1 |
| S4 | 0 | 1 | 0 | 0 |
| S5 | 0 | 0 | 0 | 0 |
| S6 | 0 | 1 | 0 | 1 |
| S7 | 1 | 0 | 1 | 0 |
| S8 | 0 | 0 | 0 | 0 |
| K1 | 0 | 0 | 0 | 0 |
| Uout | + $U_{dc}$ /2 | - $U_{dc}$ /2 | 0a | 0b |

Compared to the first operating state the second operating state induces less losses since switching losses and conducting state losses of controllable switches S5 and S8 are eliminated.

A switching table 3 shows positions of the controllable switches S1 to S8 during the third operating state, and corresponding values of an output voltage $U_{out}$. Controllable switches S5 and S8 are always open thereby disconnecting the second half bridge HB2 from the positive busbar BB+ and the negative busbar BB-. The neutral reference point PN is connected to the midpoint MC of the input capacitor means through the switch element K1 which is in its on-position throughout the third operating state. Figure 2 shows the inverter assembly in the third operating state.

Switching table 3, a third operating state.

| Switch | | | | |
|---|---|---|---|---|
| S1 | 1 | 0 | 0 | 0 |
| S2 | 1 | 0 | 1 | 0 |
| S3 | 0 | 1 | 0 | 1 |
| S4 | 0 | 1 | 0 | 0 |
| S5 | 0 | 0 | 0 | 0 |
| S6 | 0 | 0 | 1 | 1 |
| S7 | 0 | 0 | 1 | 1 |
| S8 | 0 | 0 | 0 | 0 |
| K1 | 1 | 1 | 1 | 1 |
| Uout | + $U_{dc}$/2 | - $U_{dc}$/2 | 0a | 0b |

Compared to the first operating state the third operating state induces less losses since switching losses and conducting state losses of controllable switches S5 and S8 are eliminated, and conducting state losses of controllable switches S6 and S7 and diodes D6 and D7 are eliminated.

In an alternative embodiment switches S6 and S7 are kept open throughout the third operating state. This procedure eliminates switching losses of the switches S6 and S7 during the third operating state.

When transferring from the third operating state to the second operating state, the control means CTRL first start to control the controllable switches S6 and S7 according to the network voltage before opening the switch element K1.

In the embodiment shown in Figures 1 and 2 the switch element K1 is a relay. Conducting state losses of a relay are substantially lower than conducting state losses of a typical controllable switch of an inverter. In alternative embodiments the switch element may be other type of switch. For example, the switch element may be a semiconductor switch having low conducting state losses.

The control means CTRL are adapted to select an operating state based on the input direct voltage $U_{dc}$ and the network voltage. When the input direct voltage $U_{dc}$ is less than twice an absolute value of instantaneous value of the network voltage the control means CTRL selects the first operating state. The condition for the first operating state can be expressed by equation

$$U_{dc} < 2|u_{ac}|$$

When the input direct voltage $U_{dc}$ is greater than twice an absolute value of instantaneous value of the network voltage the control means CTRL selects the second operating state. The condition for the second operating state can be expressed by equation

$$U_{dc} > 2|u_{ac}|.$$

When the input direct voltage $U_{dc}$ is greater than twice a peak value of the network voltage the control means CTRL selects the third operating state. The condition for the third operating state can be expressed by equation

$$U_{dc} > 2\hat{u}_{ac}.$$

Above definitions show that when the input direct voltage $U_{dc}$ is greater than twice a peak value of the network voltage the second operating state and the third operating state are alternatives to each other. In an alternative embodiment the second operating state is used when the input direct voltage $U_{dc}$ is greater than twice a peak value of the network voltage. In such an alternative embodiment there is no need for the switch element.

Depending on an embodiment, the control means may be adapted to cease modulation when the input direct voltage is less than a peak value of the network voltage.

The inverter assembly of Figure 1 is an NPC inverter assembly structurally capable of generating five-level output voltage. In an alternative embodiment the inverter assembly may comprise an inverter capable of generating even higher level output voltage, such as seven-level output voltage.

It should be understood that if the switch element K1 is ignored, Figure 1 depicts a known single phase NPC inverter assembly. Also, the switch positions showed in the switching table 1 are known in the context of the known NPC inverter assembly.

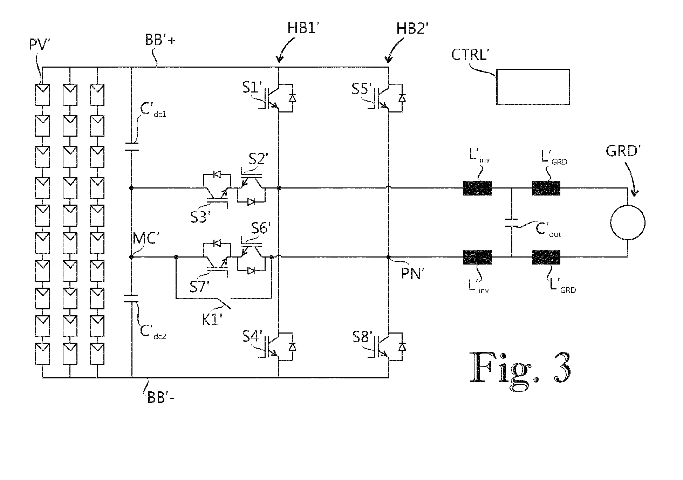

Figure 3 shows an inverter assembly according to another embodiment of the invention. The inverter assembly of Figure 3 is herein referred to as an NPC2 inverter assembly.

The NPC2 inverter assembly comprises a DC circuit, inverter means, and control means CTRL' for controlling the inverter means. The DC circuit comprises a positive busbar BB'+, a negative busbar BB'-, and input capacitor means. The input capacitor means comprise a first energy storage capacitor $C'_{dc1}$ and a second energy storage capacitor $C'_{dc2}$ connected in series between the positive busbar BB'+ and the negative busbar BB'-. There is a midpoint MC' between the first energy storage capacitor $C'_{dc1}$ and the second energy storage capacitor $C'_{dc2}$.

The inverter means are adapted to convert a direct current supplied into the inverter means through the positive busbar BB'+ and the negative busbar BB'- to an alternating current, and to feed the alternating current through output terminals of the inverter means to an electrical network GRD' having a network voltage. The inverter means are multilevel inverter means comprising a first half bridge HB1' and a second half bridge HB2'.

The first half bridge HB1' comprises controllable switches S1' and S4' connected in series between the positive busbar BB'+ and the negative busbar BB'-. The first half bridge HB1' further comprises a first switch leg comprising controllable switches S2' and S3' connected in series such that their forward directions are opposite to each other. A first end of the first switch leg is connected to a point between controllable switches S1' and S4'. A second end of the first switch leg is connected to the midpoint MC'.

The second half bridge HB2' comprises controllable switches S5' and S8' connected in series between the positive busbar BB'+ and the negative busbar BB'-. There is a neutral reference point PN' between the controllable switches S5' and S8'. Between the neutral reference point PN' and the midpoint MC' there is a second switch leg comprising controllable switches S6' and S7' connected in series such that their forward directions are opposite to each other. There is also a switch element K1' between the neutral reference point PN' and the midpoint MC'. In its on-position the switch element K1' electrically connects the neutral reference point PN' and the midpoint MC'. In its off-position the switch element K1' electrically separates the neutral reference point PN' and the midpoint MC'.

The NPC2 inverter assembly further comprises two inverter side inductors L'$_{inv}$, two grid side inductors L'$_{GRD}$ and an output capacitor C'$_{out}$, which are connected in the same way as the inverter side inductors L$_{inv}$, the grid side inductors L$_{GRD}$ and the output capacitor C$_{out}$ in the NPC inverter assembly of Figure 1.

The control means CTRL' are adapted to provide a first operating state in which the control means CTRL' operate the inverter means as a full-bridge inverter. The control means CTRL' are further adapted to provide a second operating state and a third operating state in which the control means CTRL' operate the inverter means as a half-bridge inverter.

The switching tables 1, 2 and 3 apply to the NPC2 inverter assembly when switches S1 - S8 are renamed as switches S1' - S8', and the switch element K1 is renamed as switch element K1'. Further, predetermined conditions based on which the control means CTRL' are adapted to select an operating state may be the same as explained in connection to the inverter assembly of Figure 1.

Each of the controllable switches S1 - S8 in the inverter assembly of Figure 1 and each of the controllable switches S1' - S8' in the inverter assembly of Figure 3 comprise a diode element connected antiparallel with actual switch element. The controllable switches may be for example IGBTs or MOSFETs.

In the embodiments shown in Figures 1 and 3 the first half bridge comprises the same number of controllable switches as the second half bridge. In alternative embodiments the first half bridge comprises a different number of controllable switches than the second half bridge.

Inverter assemblies of Figures 1 and 3 are suitable for use in a solar power plant because a common mode voltage in the DC circuits thereof is a direct voltage and therefore no common mode current is generated between photovoltaic cells and the ground. This is a desirable feature especially in connection with thin film photovoltaic cells.

In addition to an inverter assembly, each of the Figures 1 to 3 depicts a plurality of photovoltaic cell units, denoted as PV or PV', connected to the inverter assembly. Consequently each of the Figures 1 to 3 depicts a solar power plant comprising power supply means, the power supply means comprising the plurality of photovoltaic cell units and supply terminals, each of the plurality of photovoltaic cell units being adapted to convert solar energy into direct current and to feed the direct current out of the power supply means via the supply terminals, the supply terminals of the power supply means being connected to the positive busbar and negative busbar of the DC circuit of the inverter assembly.

It will be obvious to a person skilled in the art that the inventive concept can be implemented in various ways. The invention and its embodiments are not limited to the examples described above but may vary within the scope of the claims.

**Claims**

1. An inverter assembly comprising a DC circuit, inverter means, and control means (CTRL) for controlling the inverter means,
   the DC circuit comprising a positive busbar (BB+), a negative busbar (BB-) and input capacitor means, an input direct voltage (U$_{dc}$) being present between the positive busbar (BB+) and the negative busbar (BB-) during use, the input capacitor means having a midpoint (MC) and being connected between the positive busbar (BB+) and the negative busbar (BB-), the inverter means being adapted to convert a direct current supplied through the positive busbar (BB+) and the negative busbar (BB-) to an alternating current, and to feed the alternating current through output terminals of the inverter means to an electrical network (GRD) having a network voltage, the inverter means being multilevel inverter means comprising a first half bridge (HB1) and a second half bridge (HB2), both the first half bridge (HB1) and the second half bridge (HB2) comprising controllable switches (S1 - S8),
   the control means (CTRL) being adapted to provide a first operating state in which the control means (CTRL) operate the inverter means as a full-bridge inverter, **characterized in that** the control means (CTRL) are further adapted to provide at least one further operating state in which the control means (CTRL) operate the inverter means as a half-bridge inverter, wherein one of the half bridges (HB2) is disconnected from the positive busbar (BB+) and the negative busbar (BB-) while a neutral reference point (PN) of said one of the half bridges (HB2) is connected to the midpoint (MC) of the input capacitor means, the control means (CTRL) being adapted to select an operating state based on predetermined conditions.

2. An inverter assembly according to claim 1, **characterized in that** the at least one further operating state comprise a second operating state in which the neutral reference point (PN) is connected to the midpoint (MC) of the input capacitor means through a subset of the controllable switches of said one of the half bridges (HB2).

3. An inverter assembly according to claim 1 or 2, **characterized in that** the inverter assembly further comprises a switch element (K1) between the neutral reference point (PN) and the midpoint (MC) of the input capacitor means, and the at least one further operating state comprise a third operating state in which the neutral reference point (PN) is connected to the midpoint (MC) of the input capacitor means through the switch element (K1).

4. An inverter assembly according to claim 3, **characterized in that** the switch element (K1) is a relay.

5. An inverter assembly according to any preceding claim, **characterized in that** the control means (CTRL) are adapted to select the first operating state when the input direct voltage ($U_{dc}$) is less than twice an absolute value of instantaneous value of the network voltage.

6. An inverter assembly according to claim 2, **characterized in that** the control means (CTRL) are adapted to select the second operating state when the input direct voltage ($U_{dc}$) is greater than twice an absolute value of instantaneous value of the network voltage.

7. An inverter assembly according to claim 3 or 4, **characterized in that** the control means (CTRL) are adapted to select the third operating state when the input direct voltage ($U_{dc}$) is greater than twice a peak value of the network voltage.

8. A solar power plant comprising power supply means, the power supply means comprising at least one photovoltaic cell unit (PV) and supply terminals, each of the at least one photovoltaic cell unit (PV) being adapted to convert solar energy into direct current and to feed the direct current out of the power supply means via the supply terminals, **characterized in that** the solar power plant further comprises an inverter assembly according to any one of claims 1 to 7, the supply terminals of the power supply means being connected to the positive busbar (BB+) and the negative busbar (BB-).

**Amended claims in accordance with Rule 137(2) EPC.**

1. An inverter assembly comprising a DC circuit, inverter means, and control means (CTRL) for controlling the inverter means,
the DC circuit comprising a positive busbar (BB+), a negative busbar (BB-) and input capacitor means, an input direct voltage ($U_{dc}$) being present between the positive busbar (BB+) and the negative busbar (BB-) during use, the input capacitor means having a midpoint (MC) and being connected between the positive busbar (BB+) and the negative busbar (BB-), the inverter means being adapted to convert a direct current supplied through the positive busbar (BB+) and the negative busbar (BB-) to an alternating current, and to feed the alternating current through output terminals of the inverter means to an electrical network (GRD) having a network voltage, the inverter means being multilevel inverter means comprising a first half bridge (HB1) and a second half bridge (HB2), both the first half bridge (HB1) and the second half bridge (HB2) comprising controllable switches (S1 - S8),
the control means (CTRL) being adapted to provide a first operating state in which the control means (CTRL) operate the inverter means as a full-bridge inverter, and at least one further operating state in which the control means (CTRL) operate the inverter means as a half-bridge inverter, wherein one of the half bridges (HB2) is disconnected from the positive busbar (BB+) and the negative busbar (BB-) while a neutral reference point (PN) of said one of the half bridges (HB2) is connected to the midpoint (MC) of the input capacitor means, the control means (CTRL) being adapted to select an operating state based on predetermined conditions, **characterized in that** the inverter assembly further comprises a switch element (K1) between the neutral reference point (PN) and the midpoint (MC) of the input capacitor means, and the at least one further operating state comprise a third operating state in which the neutral reference point (PN) is connected to the midpoint (MC) of the input capacitor means through the switch element (K1).

2. An inverter assembly according to claim 1, **characterized in that** the at least one further operating state comprise a second operating state in which the neutral reference point (PN) is connected to the midpoint (MC) of the input capacitor means through a subset of the controllable switches of said one of the half bridges (HB2).

3. An inverter assembly according to claim 1 or 2, **characterized in that** the switch element (K1) is a relay.

4. An inverter assembly according to any preceding claim, **characterized in that** the control means (CTRL) are adapted to select the first operating state when the input direct voltage ($U_{dc}$) is less than twice an absolute value of instantaneous value of the network voltage.

5. An inverter assembly according to claim 2, **characterized in that** the control means (CTRL) are adapted to select the second operating state when the input direct voltage ($U_{dc}$) is greater than twice an absolute value of instantaneous value of the network voltage.

6. An inverter assembly according to any preceding claim, **characterized in that** the control means (CTRL) are adapted to select the third operating state when the input direct voltage ($U_{dc}$) is greater than twice a peak value of the network voltage.

**7.** A solar power plant comprising power supply means, the power supply means comprising at least one photovoltaic cell unit (PV) and supply terminals, each of the at least one photovoltaic cell unit (PV) being adapted to convert solar energy into direct current and to feed the direct current out of the power supply means via the supply terminals, **characterized in that** the solar power plant further comprises an inverter assembly according to any one of claims 1 to 6, the supply terminals of the power supply means being connected to the positive busbar (BB+) and the negative busbar (BB-).

Fig. 1

Fig. 2

Fig. 3

**Europäisches Patentamt**
**European Patent Office**
**Office européen des brevets**

## EUROPEAN SEARCH REPORT

Application Number

EP 12 16 3558

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROBERT STALA: "Individual MPPT of photovoltaic arrays with use of single-phase three-level diode-clamped inverter", INDUSTRIAL ELECTRONICS (ISIE), 2010 IEEE INTERNATIONAL SYMPOSIUM ON, IEEE, PISCATAWAY, NJ, USA, 4 July 2010 (2010-07-04), pages 3456-3462, XP031803364, ISBN: 978-1-4244-6390-9 * figures 1,3a,3b * | 1,2,5,6,8 | INV. H02M7/487 |
| A | EP 2 421 141 A1 (ABB OY [FI]) 22 February 2012 (2012-02-22) * figures 1,2 * * paragraphs [0005] - [0007], [0017], [0021] * | 1-8 | |
| A | US 2011/299312 A1 (KARRAKER DOUGLAS W [US] ET AL) 8 December 2011 (2011-12-08) * figure 5 * | 1-8 | |
| A | EP 2 323 248 A2 (GEN ELECTRIC [US]) 18 May 2011 (2011-05-18) * paragraphs [0004], [0006], [0014], [0016], [0017], [0019], [0021]; figures 2-7 * | 1-8 | TECHNICAL FIELDS SEARCHED (IPC) H02M |

The present search report has been drawn up for all claims

| Place of search | Date of completion of the search | Examiner |
|---|---|---|
| The Hague | 27 November 2012 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 12 16 3558

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2012

| Patent document cited in search report | | | Publication date | Patent family member(s) | | Publication date |
|---|---|---|---|---|---|---|
| EP 2421141 | | A1 | 22-02-2012 | CN 102377196 A | | 14-03-2012 |
| | | | | EP 2421141 A1 | | 22-02-2012 |
| | | | | US 2012044730 A1 | | 23-02-2012 |
| US 2011299312 | | A1 | 08-12-2011 | US 2011299312 A1 | | 08-12-2011 |
| | | | | WO 2011156199 A2 | | 15-12-2011 |
| EP 2323248 | | A2 | 18-05-2011 | AU 2010238544 A1 | | 26-05-2011 |
| | | | | CN 102055364 A | | 11-05-2011 |
| | | | | EP 2323248 A2 | | 18-05-2011 |
| | | | | US 2011109285 A1 | | 12-05-2011 |

EPO FORM P0459

For more details about this annex : see Official Journal of the European Patent Office, No. 12/82